# EUROPÄISCHE PATENTSCHRIFT

(11) **EP 2 380 399 B1**
(45) Veröffentlichungstag und Bekanntmachung des Hinweises auf die Patenterteilung: **10.10.2012**
(21) Anmeldenummer: 09774881.8
(22) Anmeldetag: 09.12.2009
(51) Int. Cl.: H05B 6/12

(54) **KOCHFELD MIT MEHREREN HEIZELEMENTEN UND ZUMINDEST EINER LEISTUNGSELEKTRONIK-BAUGRUPPE**
COOKING HOB WITH SEVERAL HEATING ELEMENTS AND AT LEAST ONE POWER ELECTRONICS SUBASSEMBLY
TABLE DE CUISSON COMPRENANT PLUSIEURS ÉLÉMENTS CHAUFFANTS ET AU MOINS UN MODULE D'ÉLECTRONIQUE DE PUISSANCE

(30) Priorität: 19.12.2008 ES 200803707
(43) Veröffentlichungstag der Anmeldung: 26.10.2011
(73) Patentinhaber: BSH Bosch und Siemens Hausgeräte GmbH, 81739 München (DE)
(72) Erfinder: ARNAL VALERO, Adolfo, E-50009 Zaragoza (ES); GARDE ARANDA, Ignacio, E-50012 Zaragoza (ES); HERNANDEZ BLASCO, Pablo, Jesus, E-50410 Cuarte de Huerva (Zaragoza) (ES); LLORENTE GIL, Sergio, E-50009 Zaragoza (ES); PEINADO ADIEGO, Ramon, E-50008 Zaragoza (ES); SANTOLARIA LORENZO, Jose, Alfonso, E-22400 Monzón (Huesca) (ES); PALACIOS TOMAS, Daniel, E-50002 Zaragoza (ES)
(86) Internationale Anmeldenummer: PCT/EP2009/066668
(87) Internationale Veröffentlichungsnummer: WO 2010/069825

(56) Entgegenhaltungen:
- EP-A1- 0 844 807
- EP-A1- 1 931 177
- US-B1- 6 498 325

## Beschreibung

Die Erfindung geht aus von einem Kochfeld mit mehreren Heizelementen und mit zumindest einer Leistungselektronik-Baugruppe nach dem Oberbegriff des Anspruchs 1.

Aus der EP 0 971 562 B1 ist ein Induktionskochfeld mit mehreren Heizelementen, zwei Leistungselektronik-Baugruppen zum Erzeugen eines Heizstroms zum Betreiben der Heizelemente und mit einer Schaltanordnung zum Herstellen und Trennen einer Verbindung zwischen der Leistungselektronik-Baugruppe und den Heizelementen bekannt. Die Schaltanordnung ist in gattungsgemäßen Kochfeldern mit den Wechselrichtern, die die Leistungselektronik-Baugruppe bilden, auf einer Platine montiert. Andererseits sind auch einfachere Kochfelder bekannt, in denen die Heizelemente mit jeweils einer Leistungselektronik-Baugruppe ohne dazwischen liegende Schaltanordnung fest verdrahtet sind.

Aus der ES 21 43 430 B1 und aus der daraus hervorgegangenen europäischen Patentanmeldung EP 09 86 287 A2 ist es ferner bekannt, die Eineindeutigkeit der Zuordnung zwischen Wechselrichtern und Induktoren dadurch zu brechen, dass zu einer kurzfristigen Überhöhung der Heizleistung in einem so genannten "Booster-Modus" zwei Wechselrichter mit einem einzigen Induktor verschaltet werden, so dass der Induktor simultan von zwei Wechselrichtern betrieben werden kann.

Aus EP 1 931 177 A1 ist ein Induktionskochfeld mit mehreren Heizelementen und zumindest einer Leistungselektronik-Baugruppe zum Erzeugen eines Heizstroms zum Betreiben der Heizelemente bekannt. Darüber hinaus ist eine Schaltanordnung zum Herstellen und Trennen einer Verbindung zwischen der Leistungselektronik-Baugruppe und den Heizelementen vorgesehen.

Der Erfindung liegt insbesondere die Aufgabe zugrunde, ein Kochfeld mit einer flexiblen Architektur bereitzustellen.

Die Aufgabe wird insbesondere durch die Merkmale des unabhängigen Anspruchs 1 gelöst. Vorteilhafte Ausgestaltungen der Erfindung ergeben sich aus den Unteransprüchen.

Die Erfindung betrifft ein Kochfeld, insbesondere ein Induktionskochfeld, mit mehreren Heizelementen, zumindest einer Leistungselektronik-Baugruppe zum Erzeugen eines Heizstroms zum Betreiben der Heizelemente und mit einer Schaltanordnung zum Herstellen und Trennen einer Verbindung zwischen der Leistungselektronik-Baugruppe und den Heizelementen.

Um die Architektur des Kochfelds flexibler zu gestalten, wird vorgeschlagen, dass die Schaltanordnung als eine von der Leistungselektronik-Baugruppe getrennte Baugruppe ausgebildet ist. Dadurch kann die gleiche Leistungselektronik-Baugruppe sowohl in Kochfeldern verwendet werden, die fest mit der Leistungselektronik-Baugruppe verdrahtete Heizelemente haben als auch in Kochfeldern, die eine Schaltanordnung zum Herstellen und Trennen der Verbindung zwischen dem Heizelement und der Leistungselektronik-Baugruppe umfassen. Eine Anpassung der Schaltanordnung und der Leistungselektronik-Baugruppe an verschiedene Betriebsbedingungen kann unabhängig erfolgen, so dass beispielsweise die Leistungselektronik-Baugruppe für verschiedene Länder mit verschiedenen Haushaltsstromnetzen unterschiedlich gewählt werden kann. Auch im Servicefall kann ein Austausch einer einzelnen Baugruppe kostengünstig ermöglicht werden.

Die Vorteile der Erfindung kommen insbesondere in Induktionskochfeldern zum Tragen, in welchen die Heizelemente Induktoren sind und in welchen die Leistungselektronik-Baugruppe wenigstens einen Wechselrichter zum Erzeugen des Heizstroms umfasst.

Eine unabhängige Leistungsversorgung mehrerer Heizzonen kann ermöglicht werden, wenn die Leistungselektronik-Baugruppe wenigstens zwei Wechselrichter umfasst. Durch eine höhere Anzahl von Wechselrichtern und/oder Induktoren steigt die Komplexität der Schaltungsanordnung, so dass das Vorsehen einer separaten Baugruppe mit wachsender Induktorzahl immer sinnvoller wird.

Ferner wird vorgeschlagen, dass die Schaltanordnung eine Vielzahl von Kondensatoren umfasst, die jeweils einem als Induktor ausgebildeten Heizelement zugeordnet sind. Da die Schaltanordnung in der Regel ohnehin einen Ausgang pro Induktor umfasst, kann der Resonanz-Kondensator, der den Induktor zu einem Resonanz-Schwingkreis ergänzt, sehr gut in die Schaltanordnung integriert werden.

Wenn die Baugruppe der Schaltanordnung zudem einen Topfdetektions-Schaltkreis umfasst, kann dieser vor Störeinflüssen der Leistungselektronik-Baugruppe bzw. der Wechselrichter geschützt werden und die Ausgänge zu den Induktoren können zur Übertragung von Messimpulsen bzw. Messstömen auf die Induktoren verwendet werden.

Nach einem weiteren Aspekt der Erfindung wird vorgeschlagen, dass die Baugruppe der Schaltanordnung einen Mikrocontroller zum Betätigen von Schaltelementen der Schaltanordnung umfasst. Dadurch kann eine weitgehend autarke Schaltanordnung erreicht werden, die mit einem minimalen Steuerungsaufwand von einer zentralen Steuereinheit des Kochfelds gesteuert werden kann.

Nach einem weiteren Aspekt der Erfindung umfasst das Kochfeld Temperatursensoren, die an den als Induktoren ausgebildeten Heizelementen angebracht sind, und einen in die Baugruppe der Schaltanordnung integrierten Ausleseschaltkreis zum Auslesen von Messwerten der Temperatursensoren. Dadurch können weitere optionale Funktionen des Kochfelds in die Baugruppe der Schaltanordnung integriert werden, die in kostengünstigeren Kochfeldern entfallen könnten. Die Baugruppe kann damit eine Anpassung bzw. flexibel wählbare und gestaltbare Ergänzung der Leistungselektronik-Baugruppe ermöglichen.

Ferner wird vorgeschlagen, dass die Leistungselektronik-Baugruppe und/oder die Baugruppe der Schaltanordnung wenigstens ein Steckverbindungsmittel zum Herstellen einer Kommunikations- und/oder Stromleitungsverbindung zwischen der Leistungselektronik-Baugruppe und der Baugruppe der Schaltanordnung umfasst. Dadurch kann die Montage vereinfacht werden und durch die Verwendung einer genormten Steckverbindung kann die Flexibilität der Architektur weiter erhöht werden.

Die Leistungselektronik-Baugruppe kann neben dem Wechselrichter bzw. den Wechselrichtern einen Gleichrichter, einen Filterschaltkreis und eine Schnittstelle zu einem Haushaltsstromnetz umfassen.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Induktionskochfeld mit einer Vielzahl von Heizelementen, zwei Leistungselektronik-Baugruppen und einer Schaltungsanordnung,
- Fig. 2: ein Verschaltungsschema der Wechselrichter der Leistungselektronik-Baugruppe mit den Heizelementen,
- Fig. 3: die Leistungselektronik-Baugruppe aus Figur 1 in einer Detaildarstellung,
- Fig. 4: die Schaltungsanordnung aus Figur 1 in einer Detaildarstellung.

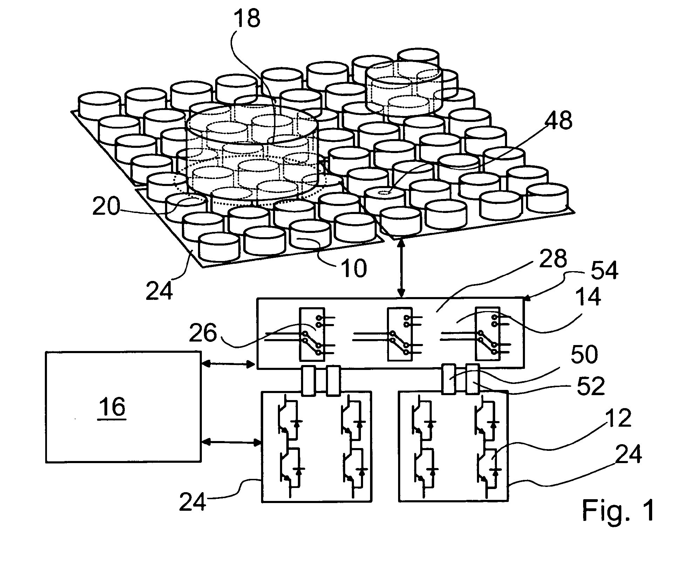

Figur 1 zeigt ein Induktionskochfeld mit einer Vielzahl von Heizelementen, die in einer Matrix angeordnet sind. Die Heizelemente sind Induktoren 10, die von zwei Leistungselektronik-Baugruppen 24 betrieben werden. Die Leistungselektronik-Baugruppen 24 erzeugen einen hochfrequenten Heizstrom und sind über eine Schaltanordnung 14 mit den Induktoren 10 verbunden. Die Schaltanordnung 14 dient zum Herstellen und Trennen der Verbindung zwischen der Leistungselektronik-Baugruppe 24 und den als Induktoren 10 ausgebildeten Heizelementen und umfasst eine Reihe von elektromechanischen Relais 26 oder Halbleiter-Relais.

In dem in Fig. 1 dargestellten Ausführungsbeispiel hat das Induktionskochfeld eine Matrix von insgesamt 64 Induktoren 10, die in einem quadratischen Gitter mit 8 x 8 Punkten angeordnet sind.

Eine Steuereinheit 16 des Induktionskochfelds steuert den Betrieb von Wechselrichtern 12 der Leistungselektronik-Baugruppe 24 und betätigt die Schaltanordnung 14 derart, dass die Steuereinheit 16 in einer Nähe eines Bodens eines Kochgeschirrelements 18 angeordnete Induktoren 10 zu flexibel definierbaren Heizzonen 20 zusammenfasst. Die zu einer Heizzone 20 zusammengefassten Induktoren 10 werden von der Steuereinheit 16 zum Beheizen des Kochgeschirrelements 18 in einer aufeinander abgestimmten Weise betrieben.

Die zu der Heizzone 20 zusammengefassten Induktoren 10 werden dabei insbesondere so betrieben, dass destruktive Interferenzen zwischen den Induktoren und ein Brummen des Induktionskochfelds vermieden werden. Dazu werden die Heizfrequenzen der Heizströme aufeinander abgestimmt, vorzugsweise werden die Induktoren 10 einer Heizzone 20 mit der gleichen Heizfrequenz betrieben, oder es wird ein Mindestabstand von ca. 25 kHz zwischen den Heizfrequenzen eingehalten, so dass eine entstehende Intermodulationsfrequenz außerhalb eines für den Menschen hörbaren Frequenzbereichs liegt.

Die Anzahl von Wechselrichtern 12 in der Leistungselektronik-Baugruppe 24 des Induktionskochfelds ist weit kleiner als die Anzahl von Induktoren 10. In dem in Fig. 1 dargestellten Ausführungsbeispiel ist jeder von insgesamt vier Gruppen von Induktoren 10 ein Wechselrichter 12 zugeordnet. Die Elemente der Schaltanordnung 14 sind auf eine separate Platine 28 montiert, die eine von der Leistungselektronik-Baugruppe 24 getrennte Baugruppe 54 trägt.

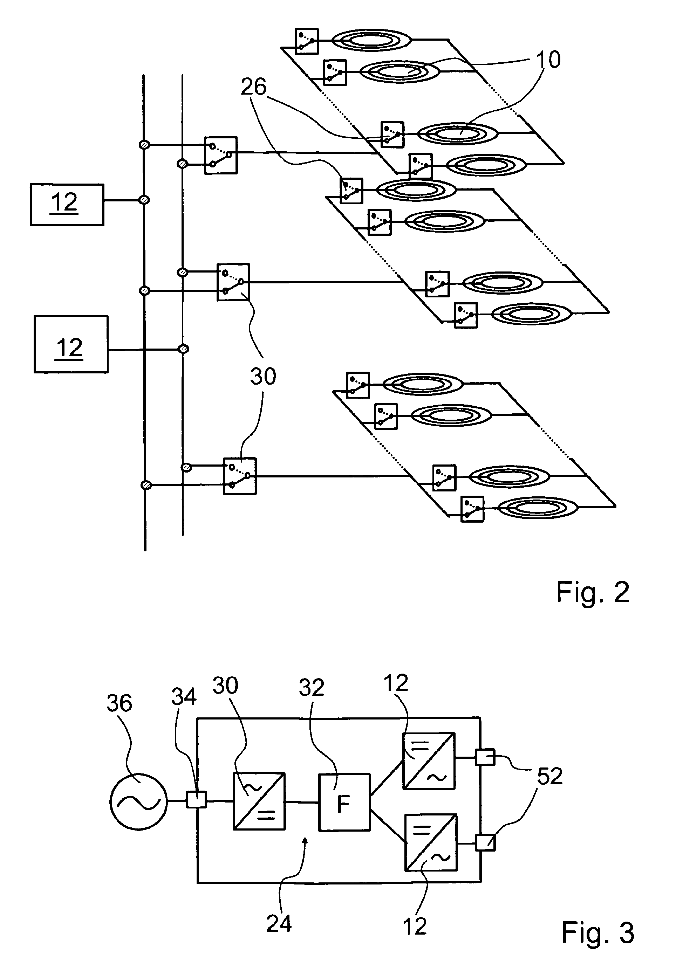

Fig. 2 zeigt eine Verschaltung der Wechselrichter 12 mit den Induktoren 10 über die Schaltanordnung 14. Die Induktoren 10 einer Gruppe sind parallel geschaltet und die Schaltanordnung 14 umfasst zu jedem Induktor 10 ein Relais 26, das in einer ersten Schaltstellung eine leitende Verbindung zwischen dem Wechselrichter 12 und dem Induktor 10 herstellt und in einer zweiten Schaltstellung diese leitende Verbindung unterbricht. Die Steuereinheit 16 kann über Steuerleitungen Ströme zum Aktivieren von Elektromagneten der Relais 26 erzeugen und so die Elektromagnete der Relais 26 unabhängig voneinander betätigen, um durch ein Herstellen der Verbindung zwischen dem Wechselrichter 12 und dem Induktor 10 diesen Induktor 10 zu aktivieren.

Fig. 3 zeigt eine der Leistungselektronik-Baugruppen 24 aus Figur 1 in einer detaillierteren Darstellung. Die Leistungselektronik-Baugruppe 24 umfasst zwei Wechselrichter 12 zum Erzeugen des Heizstroms. Die Wechselrichter 12 sind in dem in Figur 1 dargestellten Ausführungsbeispiel Halbbrücken-Wechselrichter. Ferner sind in die Leistungselektronik-Baugruppe 24 ein Gleichrichter 30, ein Filterschaltkreis 32 und eine Schnittstelle 34 zu einem Haushaltsstromnetz 36 integriert.

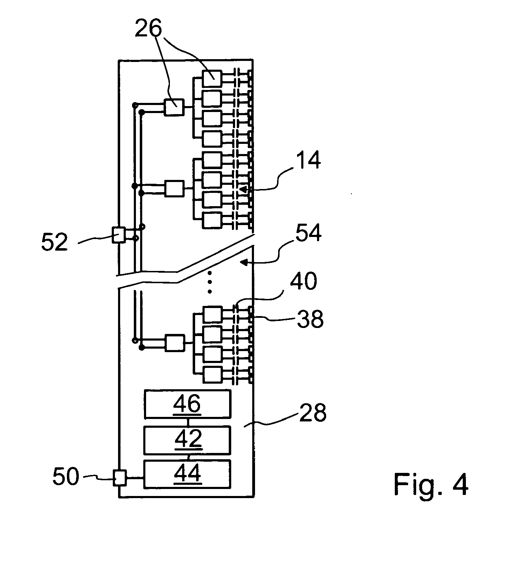

Fig. 4 zeigt die Schaltanordnung 14 aus Fig. 1 in einer detaillierteren Darstellung. Die Schaltanordnung 14 hat eine Vielzahl von Ausgangsschnittstellen 38, die mit je einem Induktor 10 verbunden werden können. Die Induktoren 10 können auf diese Weise unabhängig voneinander angesteuert werden. Ferner ist auch eine Vielzahl von Kondensatoren 40 in die Schaltanordnung 14 integriert, die jeweils zwischen einem Relais 26 und einer Ausgangsschnittstelle 38 angeordnet sind. Über die Ausgangsschnittstelle 38 sind die Kondensatoren 40 jeweils einem der Induktoren 10 zugeordnet, und die Kondensatoren 40 ergänzen den jeweiligen Induktor 10 zu einem Serienschwingkreis, dessen Resonanzfrequenz im Bereich der Frequenz des Heizstroms liegt, die von der Größenordnung 75kHz ist.

Die Baugruppe 54 der Schaltanordnung 14 umfasst ferner einen Topfdetektions-Schaltkreis 42, der ebenfalls über die Relais 26 mit den Induktoren 10 verbunden werden kann. Der Topfdetektions-Schaltkreis 42 erzeugt niedervoltige Messpulse, die eine Oszillation in einem der von den Induktoren 10 und den Kondensatoren 40 gebildeten Serienschwingkreisen erzeugt. Aus einer Dämpfung dieser Oszillation wird auf die Anwesenheit eines Kochtopfs 18 und auf einen Überdeckungsgrad zwischen dem Kochtopf 18 und dem betreffenden Induktor 10 geschlossen. Die Steuereinheit 16 kann die Signale des Topfdetektions-Schaltkreises 42 auswerten.

Außerdem sind in die Baugruppe 54 der Schaltanordnung 14 ein Mikrocontroller 44 zum Betätigen der Schaltelemente bzw. Relais 26 der Schaltanordnung 14 und ein Ausleseschaltkreis 46 integriert.

Die Induktoren 10 tragen in ihren Zentren jeweils einen in Fig. 1 dargestellten Temperatursensor 48, dessen Messwerte von dem Ausleseschaltkreis 46 ausgelesen und in ein pulsweitenmoduliertes oder frequenzkodiertes Signal übersetzt werden.

Die Leistungselektronik-Baugruppe 24 und die Baugruppe 54 der Schaltanordnung 14 umfassen jeweils zwei sich ergänzende Steckverbindungsmittel 50, 52. Das erste Steckverbindungsmittel 50 ist eine Schnittstelle zum Übertragen niedervoltiger Steuersignale und dient zum Herstellen einer Kommunikationsverbindung zwischen der Leistungselektronik-Baugruppe 24 und der Baugruppe 54 der Schaltanordnung 14. Das zweite Steckverbindungsmittel 52 verbindet die Wechselrichter 12 mit den Eingängen der Schalteinheiten 26 der Schaltanordnung 14 und ist zum Übertragen der Heizströme ausgelegt, deren Amplitude in der Größenordnung von 100V liegt.

### Bezugszeichen

- 10: Induktor
- 12: Wechselrichter
- 14: Schaltanordnung
- 16: Steuereinheit
- 18: Kochgeschirrelement
- 20: Heizzone
- 24: Leistungselektronik-Baugruppe
- 26: Relais
- 28: Platine
- 30: Gleichrichter
- 32: Filterschaltkreis
- 34: Schnittstelle
- 36: Haushaltsstromnetz
- 38: Ausgangsschnittstelle
- 40: Kondensator
- 42: Topfdetektions-Schaltkreis
- 44: Mikrocontroller
- 46: Ausleseschaltkreis
- 48: Temperatursensor
- 50: Steckverbindungsmittel
- 52: Steckverbindungsmittel
- 54: Baugruppe

## Patentansprüche

1. Kochfeld, insbesondere Induktionskochfeld, mit mehreren Heizelementen (10), zumindest einer Leistungselektronik-Baugruppe (24) zum Erzeugen eines Heizstroms zum Betreiben der Heizelemente (10) und mit einer Schaltanordnung (14) zum Herstellen und Trennen einer Verbindung zwischen der Leistungselektronik-Baugruppe (24) und den Heizelementen (10),
**dadurch gekennzeichnet, dass** die Schaltanordnung (14) als eine von der Leistungselektronik-Baugruppe (24) getrennte Baugruppe (54) ausgebildet ist.

2. Kochfeld nach Anspruch 1, **dadurch gekennzeichnet, dass** die Heizelemente (10) Induktoren sind und dass die Leistungselektronik-Baugruppe (24) wenigstens einen Wechselrichter (12) zum Erzeugen des Heizstroms umfasst.

3. Kochfeld nach Anspruch 2, **dadurch gekennzeichnet, dass** die Leistungselektronik-Baugruppe (24) wenigstens zwei Wechselrichter (12) umfasst.

4. Kochfeld nach einem der vorhergehenden Ansprüche, **dadurch gekennzeichnet, dass** die Schaltanordnung (14) eine Vielzahl von Kondensatoren (40) umfasst, die jeweils einem als Induktor ausgebildeten Heizelement (10) zugeordnet sind.

5. Kochfeld nach einem der vorhergehenden Ansprüche, **dadurch gekennzeichnet, dass** die Baugruppe (54) der Schaltanordnung (14) einen Topfdetektions-Schaltkreis (42) umfasst.

6. Kochfeld nach einem der vorhergehenden Ansprüche, **dadurch gekennzeichnet, dass** die Baugruppe (54) der Schaltanordnung (14) einen Mikrocontroller (44) zum Betätigen von Schaltelementen (26) der Schaltanordnung (14) umfasst.

7. Kochfeld nach einem der vorhergehenden Ansprüche, **gekennzeichnet durch** Temperatursensoren (48), die an den als Induktoren ausgebildeten Heizelementen (10) angebracht sind, und **durch** einen in die Baugruppe (54) der Schaltanordnung (14) integrierten Ausleseschaltkreis (46) zum Auslesen von Messwerten der Temperatursensoren (48).

8. Kochfeld nach einem der vorhergehenden Ansprüche, **dadurch gekennzeichnet, dass** die Leistungselektronik-Baugruppe (24) und/oder die Baugruppe (54) der Schaltanordnung (14) wenigstens ein Steckverbindungsmittel (50, 52) zum Herstellen einer Kommunikations- und/oder Stromleitungsverbindung zwischen der Leistungselektronik-Baugruppe (24) und der Baugruppe (54) der Schaltanordnung (14) umfasst.

9. Kochfeld nach einem der vorhergehenden Ansprüche, **dadurch gekennzeichnet, dass** die Leistungselektronik-Baugruppe (24) einen Gleichrichter (30), einen Filterschaltkreis (32) und eine Schnittstelle (34) zu einem Haushaltsstromnetz (36) umfasst.

## Claims

1. Cooker hob, particularly induction cooker hob, with a plurality of heating elements (10), at least one electronic power subassembly (24) for generating a heating current for operating the heating elements (10) and a switching arrangement (14) for making and breaking a connection between the electronic power subassembly (24) and the heating elements (10), **characterised in that** the switching arrangement (14) is constructed as a subassembly (54) separate from the electronic power subassembly (24).

2. Cooker hob according to claim 1, **characterised in that** the heating elements (10) are inductors and that the electronic power subassembly (24) comprises at least one inverter (12) for generating the heating current.

3. Cooker hob according to claim 2, **characterised in** the electronic power subassembly (24) comprises at least two inverters (12).

4. Cooker hob according to any one of the preceding claims, **characterised in that** the switching arrangement (14) comprises a plurality of capacitors (40) which are each associated with a respective heating element (10) constructed as an inductor.

5. Cooker hob according to any one of the preceding claims, **characterised in that** the subassembly (54) of the switching arrangement (14) comprises a pot detection circuit (42).

6. Cooker hob according to any one of the preceding claims, **characterised in that** the subassembly (54) of the switching arrangement (14) comprises a microcontroller (44) for the actuation of switching elements (26) of the switching arrangement (14).

7. Cooker hob according to any one of the preceding claims, **characterised by** temperature sensors (48) which are mounted at the heating elements (10) constructed as inductors and by a read-out circuit (46), which is integrated in the subassembly (54) of the switching arrangement (14), for reading out measurement values of the temperature sensors (48).

8. Cooker hob according to any one of the preceding claims, **characterised in that** the electronic power subassembly (24) and/or the subassembly (54) of the switching arrangement (14) comprises or comprise at least one plug connecting means (50, 52) for producing a communications and/or current-conducting connection between the electronic power subassembly (24) and the subassembly (54) of the switching arrangement (14).

9. Cooker hob according to any one of the preceding claims, **characterised in that** the electronic power subassembly (24) comprises a rectifier (30), a filter circuit (32) and an interface (34) with respect to a domestic power mains (36).

## Revendications

1. Plaque de cuisson, notamment plaque de cuisson à induction, comprenant plusieurs éléments chauffants (10), au moins un module d'électronique de puissance (24) destiné à générer un courant de chauffage pour le fonctionnement des éléments chauffants (10) et comprenant un dispositif de commutation (14) destiné à établir et couper une liaison entre le module d'électronique de puissance (24) et les éléments chauffants (10),
**caractérisée en ce que** le dispositif de commutation (14) est réalisé en tant qu'un ensemble (54) séparé du module d'électronique de puissance (24).

2. Plaque de cuisson selon la revendication 1, **caractérisée en ce que** les éléments chauffants (10) sont des inducteurs et **en ce que** le module d'électronique de puissance (24) comprend au moins un convertisseur continu-alternatif (12) destiné à générer le courant de chauffage.

3. Plaque de cuisson selon la revendication 2, **caractérisée en ce que** le module d'électronique de puissance (24) comprend au moins deux convertisseurs continu-alternatif (12).

4. Plaque de cuisson selon l'une quelconque des revendications précédentes, **caractérisée en ce que** le dispositif de commutation (14) comprend une pluralité de condensateurs (40) qui sont respectivement attribués à un élément chauffant (10) réalisé comme inducteur.

5. Plaque de cuisson selon l'une quelconque des revendications précédentes, **caractérisée en ce que** l'ensemble (54) du dispositif de commutation (14) comprend un circuit de détection de faitout (42).

6. Plaque de cuisson selon l'une quelconque des revendications précédentes, **caractérisée en ce que** l'ensemble (54) du dispositif de commutation (14) comprend un microcontrôleur (44) destiné au fonctionnement d'éléments de commutation (26) du dispositif de commutation (14).

7. Plaque de cuisson selon l'une quelconque des revendications précédentes, **caractérisée par** des capteurs de température (48) qui sont installés sur les éléments chauffants (10) réalisés comme inducteurs, et par un circuit de lecture (46) intégré dans l'ensemble (54) du dispositif de commutation (14), destiné à lire des valeurs de mesure des capteurs de température (48).

8. Plaque de cuisson selon l'une quelconque des revendications précédentes, **caractérisée en ce que** le module d'électronique de puissance (24) et/ou l'ensemble (54) du dispositif de commutation (14) comprennent au moins un moyen de connexion par fiche (50, 52) destiné à établir une liaison de communication et/ou une liaison de la ligne de courant entre le module d'électronique de puissance (24) et l'ensemble (54) du dispositif de commutation (14).

9. Plaque de cuisson selon l'une quelconque des revendications précédentes, **caractérisée en ce que** le module d'électronique de puissance (24) comprend un redresseur (30), un circuit de filtrage (32) et une interface (34) vers un réseau de courant domestique (36).
